# EUROPÄISCHE PATENTSCHRIFT

(11) **EP 2 266 854 B1**
(45) Veröffentlichungstag und Bekanntmachung des Hinweises auf die Patenterteilung: **29.05.2013**
(21) Anmeldenummer: 10002670.7
(22) Anmeldetag: 13.03.2010
(51) Int. Cl.: B60T 15/54, B60T 17/00

(54) **Relaisventil, Geräuschdämpfer, Ventileinrichtung und Fahrzeug**
Relay valve, acoustic damper, valve device and vehicle
Soupape de relais, silencieux d'admission, dispositif de soupape et véhicule

(30) Priorität: 23.06.2009 DE 102009029968
(43) Veröffentlichungstag der Anmeldung: 29.12.2010
(73) Patentinhaber: WABCO GmbH, 30453 Hannover (DE)
(72) Erfinder: Eggebrecht, Detlev, 30519 Hannover (DE)
(74) Vertreter: Lauerwald, Jörg

(56) Entgegenhaltungen:
- EP-A1- 0 708 007
- EP-A1- 1 844 999
- DE-A1- 4 040 278
- DE-C1- 19 753 049

## Beschreibung

Die Erfindung betrifft ein Relaisventil für eine Druckluftanlage, derart wie in DE 4040278A offenbart, eine Ventileinrichtung mit dem Relaisventil sowie ein Fahrzeug mit dem Relaisventil und/oder mit der Ventileinrichtung.

Bekannte Relaisventile sind luftmengenverstärkende Ventile, welche nach Maßgabe eines Steuerdrucks Druckluft mit diesem Steuerdruck aussteuern und zum schnellen Belüften bzw. Entlüften bspw. Bremszylindern einer Druckluftbremsanlage eines Fahrzeugs bereitstellen. Hierfür weisen derartige Relaisventile regelmäßig einen Anschluss auf, über welchen sie mit Vorratsluft bspw. aus einem Druckluftvorratsbehälter belüftbar sind. Zudem weisen derartige Relaisventile regelmäßig eine Entlüftung auf, über welche Druckluft zur Atmosphäre hin entlüftet werden kann.

Diese bekannten Relaisventile sind ggf. zusammen mit weiteren Komponenten, insbesondere Ventilen, einer Druckluftanlage in eine Ventileinrichtung integriert. Diese Ventileinrichtung ist bspw. eine elektronische Luftaufbereitungseinrichtung, eine elektromagnetische Feststellbremseinrichtung oder ein Achsmodulator.

Das bekannte Relaisventil bzw. die Ventileinrichtung weist ein Gehäuse mit einem verschiebbar in dem Gehäuse angeordneten Relaisventilkolben auf. Das Gehäuse ist hierbei regelmäßig ein massiver mit Bohrungen versehener Ventilblock, welcher bspw. aus Aluminium gefertigt ist. Ferner weist das Relaisventil einen Relaisventildeckel auf, der den Relaisventilkolben in dem Gehäuse einschließt.

Das bekannte Relaisventil weist Bohrungen bzw. Aussparungen als Druckluftleitungen in seinem Gehäuse auf. Durch eine derartige Bohrung und ggf. eine pneumatisch mit dieser Bohrung verbundene Bohrung in dem Relaisventildeckel wird dem Relaisventil der Steuerdruck zugeführt. Über weitere Bohrungen bzw. Aussparungen in dem Gehäuse wird ferner der ausgesteuerte Druck bereitgestellt und das Relaisventil mit Druckluft versorgt. Nach dem Stand der Technik ist das Relaisventil ferner über wenigstens eine Bohrung bzw. Aussparung in dem Gehäuse entlüftbar, wobei die zu entlüftende Luft durch diese Bohrung bzw. Aussparung durch das Gehäuse einem Anschluss zur Verbindung mit einem Geräuschdämpfer bzw. einem Geräuschdämpfer zugeführt wird.

Der Geräuschdämpfer ist nach dem Stand der Technik an dem Gehäuse bzw. Ventilblock angeordnet und dient zur Dämpfung von Entlüftungsgeräuschen. Aufgrund der Anordnung des Geräuschdämpfers an dem Gehäuse des Relaisventils bzw. der Ventileinrichtung und aufgrund der Bohrungen bzw. Aussparungen in dem Gehäuse zur Verbindung der Entlüftung des Relaisventils mit dem Geräuschdämpfer ist eine große Außenfläche des Gehäuses in ihrer Form festgelegt, wodurch eine kompakte und flexible Ausgestaltung des Gehäuses stark eingeschränkt ist. Insbesondere kann ein derart komplex ausgestaltetes Gehäuse bzw. Ventilblock Materialanhäufungen und Lunker und somit Qualitätsmängel aufweisen.

Bekannt ist ferner aus EP 1 844 999 A1 ein Relaisventil, welches eine Bohrung in dem Relaisventilkolben bzw. ein Relaisventilkolbenloch und eine Bohrung in dem Relaisventildeckel bzw. ein Relaisventildeckelloch aufweist, wobei an dem Deckel ein Anschluss vorgesehen ist, an welchem ein Redundanzluftdruck bspw. von einem Anhängersteuerventil zu dem Geräuschdämpfer des Relaisventils entlüftbar ist. Die Entlüftung dieses Redundanzluftdruckes erfolgt hierbei in Richtung des Relaisventils durch das Relaisventildeckelloch und nachfolgend durch das Relaisventilkolbenloch zur regulären Entlüftung des Relaisventils, so dass die Entlüftung dieses Redundanzluftdruckes zusammen mit der Entlüftung des Relaisventils über die reguläre Entlüftung des Relaisventils durch die benannten Bohrungen bzw. Aussparungen in dem Gehäuse durch das Gehäuse zu dem an dem Gehäuse angeordneten Geräuschdämpfer erfolgt. Die genannten Nachteile des Relaisventils bzw. der Ventileinrichtung bzw. eines Fahrzeugs mit diesem Relaisventil bzw. dieser Ventileinrichtung des Standes der Technik werden von EP 1 844 999 A1 somit nicht gelöst.

Der Erfindung liegt nach alledem das Problem zugrunde, das Relaisventil der eingangs genannten Art, die Ventileinrichtung mit dem Relaisventil bzw. das Fahrzeug, welches das Relaisventil und/oder die Ventileinrichtung aufweist, zu verbessern.

Die Erfindung löst das Problem mit einem Relaisventil nach Anspruch 1 mit einer Ventileinrichtung nach Anspruch 6 und mit einem Fahrzeug nach Anspruch 10.

Der Relaisventildeckel des erfindungsgemäßen Relaisventils weist wenigstens ein Befestigungsmittel zur Befestigung eines Geräuschdämpfers an dem Relaisventildeckel auf, wobei das Relaisventil durch das Relaisventilkolbenloch und durch das Relaisventildeckelloch zu dem Geräuschdämpfer entlüftbar ist. Der Geräuschdämpfer sitzt hierbei auf dem Relaisventildeckel. Das Relaisventil muss somit nicht mehr wie beim Stand der Technik durch das Gehäuse zu dem Geräuschdämpfer entlüftet werden. Folglich können die beim Stand der Technik zur Entlüftung zum Geräuschdämpfer vorgesehenen Bohrungen bzw. Aussparungen in dem Gehäuse entfallen. Hierdurch reduziert sich die Komplexität des Gehäuses, wodurch das Risiko von Materialanhäufungen, Lunkern und anderen Qualitätsrisiken im Gehäuse sinkt und somit die Qualität des Gehäuses verbessert wird.

Auch die Abmessungen des Gehäuses bzw. des Relaisventils insgesamt verringern sich, so dass die Anzahl potentieller Montagepositionen am Fahrzeug bzw. Fahrzeugrahmen erhöht wird und somit das Relaisventil einfacher bspw. an einer bevorzugten Position am Fahrzeug bzw. seinem Rahmen angeordnet werden kann. Darüber hinaus verringert sich das Gewicht des Relaisventils. Aufgrund der weniger aufwändigen Herstellung, des niedrigeren Materialeinsatzes und der höheren Qualität verringert sich der Ausschuss während der Produktion und damit auch die Kosten des erfindungsgemäßen Relaisventils im Vergleich zu herkömmlichen Relaisventilen.

Das Relaisventil ist für eine Druckluftanlage bestimmt, wobei es sich bei dieser Druckluftanlage um eine Druckluftbremsanlage eines Nutzfahrzeugs handeln kann. Es kann jedoch auch eine andere Druckluftanlage eines Nutzfahrzeugs das erfindungsgemäße Relaisventil aufweisen. Bspw. kann das Nutzfahrzeug eine Anlage zur Luftaufbereitung mit diesem Relaisventil aufweisen. Auch ist das Relaisventil nicht auf den Einsatz in Nutzfahrzeugen beschränkt. Das erfindungsgemäße Relaisventil kann auch in anderen Fahrzeugen und/oder beweglichen Einheiten oder in stationären Anlagen zum Einsatz kommen.

Das Befestigungsmittel an dem Relaisventildeckel kann durch eine besonders ausgestaltete Form des Relaisventildeckels gebildet sein. Ggf. können jedoch auch Löcher mit oder ohne Gewinde zum Anschrauben des Geräuschdämpfers an dem Relaisventildeckel oder bspw. Mittel zum reversiblen oder irreversiblen Ankleben des Geräuschdämpfers an dem Relaisventil vorgesehen sein. Auch anderweitig ausgebildete Befestigungsmittel sind denkbar.

Vorzugsweise ist der Geräuschdämpfer mittels des Befestigungsmittels formschlüssig mit dem Relaisventildeckel verbindbar. Hierdurch kann eine sichere mechanische Verbindung hergestellt werden.

Vorzugsweise bilden das Befestigungsmittel und ein mit dem Befestigungsmittel zusammenwirkender Abschnitt des Geräuschdämpfers zusammen eine Schnappverbindung. Vorteilhafterweise ist dabei der Geräuschdämpfer mittels der Schnappverbindung formschlüssig mit dem Relaisventildeckel verbunden. Hierdurch kann der Geräuschdämpfer sehr einfach an dem Relaisventildeckel befestigt werden. Der Geräuschdämpfer braucht nämlich lediglich an dem Befestigungsmittel des Geräuschdämpfers einzuschnappen bzw. einzurasten. Dabei können Schnappnasen am Gehäuse des Geräuschdämpfers und Nuten am Relaisventildeckel vorgesehen sein. Alternativ oder zusätzlich können auch Schnappnasen am Relaisventildeckel und Nuten am Gehäuse des Geräuschdämpfers vorgesehen sein. Zur Bildung der Schnappverbindung sind jeweils die Schnappnasen in die korrespondierenden Nuten einrastbar.

In einer besonderen Ausführungsform weist das Befestigungsmittel wenigstens einen sich in eine Richtung parallel zu einer Relaisventilkolbenachse erstreckenden Abschnitt mit einer tangential zu dieser Relaisventilkolbenachse angeordneten Nut auf. Der Geräuschdämpfer kann zu seiner Befestigung am Relaisventildeckel in diese Nut einschnappen bzw. einrasten. Das Relaisventil wird in der Richtung parallel zur Relaisventilkolbenachse durch das Relaisventilkolbenloch und durch das Relaisventildeckelloch entlüftet. Aufgrund der Anordnung des Abschnitts des Befestigungsmittels und der Nut sitzt der Geräuschdämpfer sicher auf dem Relaisventildeckel und liegt zumindest teilweise direkt an dem Relaisventildeckel an, wobei das Relaisventil durch das Relaisventilkolbenloch und durch das Relaisventildeckelloch auf direktem Weg zu dem Geräuschdämpfer entlüftet.

In einer anderen besonderen Ausführungsform weist das Befestigungsmittel alternativ oder zusätzlich wenigstens eine Schnappnase auf, die zur Befestigung des Geräuschdämpfers am Relaisventildeckel in eine Nut am Geräuschdämpfer einschnappbar ist.

Der Geräuschdämpfer kann derart ausgebildet sein, dass er mittels des Befestigungsmittels am Relaisventildeckel eines erfindungsgemäßen Geräuschdämpfers befestigt werden kann.

In einer vorteilhaften Ausführungsform weist der Geräuschdämpfer wenigstens eine Schnappnase auf, die zur Befestigung des Geräuschdämpfers am Relaisventildeckel am Befestigungsmittel einschnappbar bzw. einrastbar ist. Insbesondere kann die Schnappnase an dem Befestigungsmittel bzw. in die Nut des Befestigungsmittels einschnappen bzw. einrasten und den Geräuschdämpfer auf diese Weise mit dem Relaisventildeckel verhaken. Ein Geräuschdämpfergehäuse kann hierbei bspw. einen Kunststoff aufweisen, welcher zum Befestigen des Geräuschdämpfers an dem Relaisventildeckel ggf. von dem sich parallel zur Relaisventilkolbenachse erstreckenden Abschnitt des Befestigungsmittels seitlich weggedrückt wird und hiernach in die Nut dieses Abschnitts einrastet.

In einer anderen Ausführungsform weist der Geräuschdämpfer alternativ oder zusätzlich eine Nut auf, in die das Befestigungsmittel zur Befestigung des Geräuschdämpfers am Relaisventildeckel einschnappbar ist. Insbesondere dann, wenn das Befestigungsmittel wenigstens eine Schnappnase aufweist, kann diese Schnappnase in die Nut des Geräuschdämpfers einschnappen bzw. einrasten.

Vorteilhafterweise weist der Geräuschdämpfer das Geräuschdämpfergehäuse und ein innerhalb des Geräuschdämpfergehäuses angeordnetes Dämpfungsmittel auf. Dieses Dämpfungsmittel kann von Luft durchströmt werden, so dass diese Luft durch den Geräuschdämpfer zur Atmosphäre entlüftet werden kann, wobei das Dämpfungsmittel hierbei entstehende Geräusche bzw. in dem Relaisventil erzeugte Geräusche dämpft.

Die erfindungsgemäße Ventileinrichtung weist das erfindungsgemäße Relaisventil auf, wobei an dem Relaisventildeckel dieses Relaisventils der Geräuschdämpfer befestigt werden kann. Die Ventileinrichtung weist hierbei ein Gehäuse bzw. einen Ventilblock auf, wobei das Gehäuse des Relaisventils Teil dieses Gehäuses sein kann. Insbesondere weist die Ventileinrichtung einen Ventilblock auf, welcher sowohl den Relaisventilkolben als auch weitere Komponenten, insbesondere Ventile, der Ventileinrichtung aufnimmt. Teile des Ventilblocks sind somit dem Relaisventil und andere Teile des Ventilblocks den weiteren Komponenten zugeordnet und vorzugsweise von eigenen Deckeln abgedeckt. Insbesondere schließt der Relaisventildeckel den Relaisventilkolben in dem Gehäuse ein, während die weiteren Deckel die weiteren Komponenten in dem Gehäuse einschließen.

Das Gehäuse der Ventileinrichtung weist allein schon aufgrund der Mehrzahl der in dem Gehäuse angeordneten Komponenten eine Vielzahl von Bohrungen und/oder Aussparungen auf bzw. ist sehr komplex. Die Erfindung verringert die Anzahl von Bohrungen bzw. Aussparungen in dem Gehäuse und verringert die Komplexität des Gehäuses. Das Gehäuse mit seinen Bohrlöchern bzw. Aussparungen kann an die in der Ventileinrichtung angeordneten Komponenten angepasst werden, ohne dass ein Entlüftungsweg vom Relaisventil zum Geräuschdämpfer hierbei hinderlich wäre.

Bevorzugt ist die Ventileinrichtung eine elektronische Luftaufbereitungseinrichtung, eine elektromagnetische Feststellbremseinrichtung oder bspw. ein Achsmodulator oder auch eine andere Einrichtung für eine Druckluftanlage. Bei der Druckluftanlage kann es sich um eine Druckluftbremsanlage eines Nutzfahrzeugs handeln. Die Ventileinrichtung kann jedoch alternativ zur Anordnung in einer Druckluftbremsanlage auch in einer anderen Druckluftanlage, bspw. einer Luftaufbereitungseinrichtung, eines Fahrzeugs bzw. Nutzfahrzeugs vorgesehen sein. Alternativ kann es sich bei der Ventileinrichtung auch um eine stationäre Ventileinrichtung handeln.

In einer Weiterbildung weist die Ventileinrichtung zusätzlich zu dem Relaisventil eine Drucklufteinrichtung auf. Diese Drucklufteinrichtung kann insbesondere ein weiteres Relaisventil sein. Die Drucklufteinrichtung bzw. das weitere Relaisventil weist ein Gehäuse auf, welches stoffschlüssig mit dem Gehäuse des Relaisventils verbunden ist. Insbesondere weist die Ventileinrichtung ein Gehäuse bzw. einen Ventilblock auf, welches sowohl das Gehäuse des Relaisventils als auch das Gehäuse der Drucklufteinrichtung umfasst. Das Gehäuse des Relaisventils ist somit zusammen mit dem Gehäuse der Drucklufteinrichtung als gemeinsames Gehäuse ausgebildet.

In dieser Weiterbildung ist eine Entlüftungskammer der weiteren Drucklufteinrichtung durch eine Aussparung bzw. Bohrung in dem Gehäuse bzw. Ventilblock pneumatisch mit einer Entlüftungskammer des Relaisventils verbunden. Deshalb kann die weitere Drucklufteinrichtung durch diese Aussparung bzw. Bohrung und nachfolgend durch das Relaisventil zu dem Geräuschdämpfer entlüftet werden. Insbesondere können somit zwei Relaisventile durch mit der Entlüftungskammer verbundene Anschlüsse, welche nach dem Stand der Technik jeweils für eine Entlüftung durch das Gehäuse zu einem gemeinsam genutzten separat am Gehäuse angeordneten Geräuschdämpfer vorgesehen wären, bspw. durch die zur Entlüftungskammer reichende Bohrung, pneumatisch miteinander verbunden sein. Die Drucklufteinrichtung bzw. das weitere Relaisventil kann somit zusammen mit dem Relaisventil durch das Relaisventilkolbenloch und durch das Relaisventildeckelloch zu dem Geräuschdämpfer entlüftet werden, so dass für die Drucklufteinrichtung bzw. das weitere Relaisventil kein separater Geräuschdämpfer vorgesehen sein muss.

In einer Weiterbildung ist die Drucklufteinrichtung ein weiteres Relaisventil, welches entsprechend dem erfindungsgemäßen Relaisventil ausgebildet ist. Somit weist das weitere Relaisventil einen weiteren Relaisventilkolben mit einem weiteren Relaisventilkolbenloch auf, welcher über einen weiteren Relaisventildeckel in dem Gehäuse eingeschlossen ist. Der weitere Relaisventildeckel weist ein weiteres Relaisventildeckelloch auf. Das weitere Relaisventil kann durch das weitere Relaisventilkolbenloch und das weitere Relaisventildeckelloch zu einem weiteren Geräuschdämpfer entlüftet werden, wobei dieser weitere Geräuschdämpfer auf dem weiteren Relaisventildeckel sitzt bzw. mittels eines weiteren Befestigungsmittels an diesem weiteren Relaisventildeckel befestigt ist.

Dadurch, dass über zwei Geräuschdämpfer entlüftet wird, kann mit größerer Geschwindigkeit entlüftet werden, so dass bspw. mit den Relaisventilen verbundene Bremszylinder einer Feststellbremse schneller entlüftet werden können und die Feststellbremse somit schneller eingelegt werden kann.

Aufgrund der pneumatischen Verbindung zwischen den beiden Relaisventilen kann das Relaisventil bzw. das weitere Relaisventil verglichen mit pneumatisch voneinander getrennten Relaisventilen besonders schnell entlüftet werden, wenn das jeweils andere Relaisventil gerade nicht oder weniger stark entlüftet wird. In diesem Fall kann nämlich das Relaisventil zu beiden Geräuschdämpfern entlüften.

Die Erfindung löst das ihr zugrundeliegende Problem darüber hinaus mit einem Fahrzeug, welches wenigstens ein erfindungsgemäßes Relaisventil, an dem ein Geräuschdämpfer befestigt werden kann, und/oder wenigstens eine erfindungsgemäße Ventileinrichtung aufweist. Das Fahrzeug kann hierbei insbesondere ein Nutzfahrzeug sein, welches bspw. mehrere an unterschiedlichen Orten am Fahrzeug angeordnete Ventilblöcke mit jeweils wenigstens einem erfindungsgemäßen Relaisventil aufweist, auf dessen Deckel jeweils ein Geräuschdämpfer sitzt.

Weitere Ausführungsformen ergeben sich aus den Ansprüchen sowie aus den anhand der Zeichnung näher erläuterten Ausführungsbeispielen. In der Zeichnung zeigt:
- Fig. 1: ein Relaisventil mit einem Geräuschdämpfer gemäß einem Ausführungsbeispiel der Erfindung;
- Fig. 2: eine Ventileinrichtung mit dem Relaisventil mit Geräuschdämpfer von Fig. 1 und mit einem weiteren, durch dieses Relaisventil entlüftbaren Relaisventil ohne Geräuschdämpfer und
- Fig. 3: eine Ventileinrichtung mit dem Relaisventil mit Geräuschdämpfer von Fig. 1 und mit einem weiteren, durch dieses Relaisventil entlüftbaren Relaisventil mit Geräuschdämpfer.

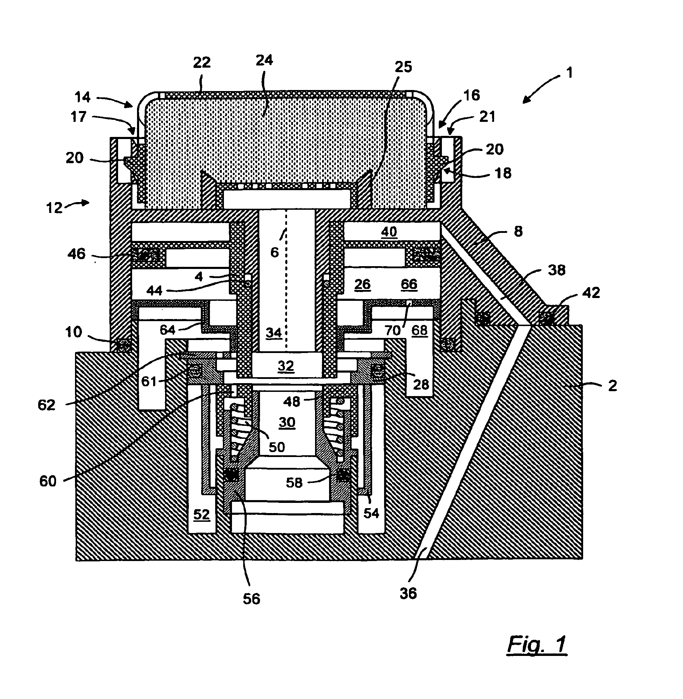

Fig. 1 zeigt ein Relaisventil 1 gemäß einem Ausführungsbeispiel der Erfindung. Das Relaisventil 1 ist ein luftmengenverstärkendes Ventil, welches Druckluft gemäß einem anliegenden Steuerdruck aussteuert und bereitstellt. Hierbei kann das Relaisventil 1 gemäß dem Steuerdruck ausgesteuerte Druckluft mit vergleichsweise größerer Luftmenge in kurzer Zeit bereitstellen.

Bspw. kann das Relaisventil 1 wenigstens einen pneumatisch betätigbaren Bremszylinder einer pneumatischen oder elektropneumatischen Bremsanlage mit Druckluft versorgen. In diesem Fall ist der Steuerdruck ein pneumatisch, bzw. mittels eines Bremspedals ausgesteuerter Druck oder ein elektropneumatisch, bspw. mittels Magnetventilen, ausgesteuerter Druck. Das Relaisventil 1 stellt den Steuerdruck luftmengenverstärkt dem Bremszylinder bereit, welcher in Erwiderung auf eine Erhöhung des Druckes einen Bremsbelag gegen eine Bremsscheibe zuspannt, die an einem Rad eines Kraftfahrzeugs angeordnet ist und in Folge das Rad bzw. das Kraftfahrzeug abbremst und somit einen Bremsvorgang durchführt. Das Relaisventil 1 verkürzt hierbei die Ansprechdauer der Bremse bzw. die Dauer bis zum Beginn eines Bremsvorgangs durch ein schnelles Belüften des Bremszylinders. Zudem ermöglicht das Relaisventil 1 ein schnelles Entlüften des Bremszylinders und kann daher wie ein Schnelllöseventil wirken.

Das Relaisventil 1 weist ein Gehäuse 2 auf, welches Teil eines Gehäuses bzw. Ventilblocks einer Ventileinrichtung sein kann. Das Gehäuse 2 ist bspw. aus einem verschiedene Aussparungen bzw. Löcher aufweisendem, ansonsten jedoch massivem Metallblock, bspw. aus Aluminium, gebildet. Die Aussparungen bzw. Löcher dienen als Luftkammern, Luftleitungen und/oder nehmen weitere Bauteile des Relaisventils 1 auf.

Das Relaisventil 1 weist einen Relaisventilkolben 4 auf, welcher entlang einer Relaisventilkolbenachse 6 verschiebbar gelagert ist. Wie weiter unten genauer beschrieben, ermöglicht der Relaisventilkolben 4 aufgrund seiner Beweglichkeit entlang der Relaisventilkolbenachse 6 eine Druckaussteuerung gemäß einer Vorgabe des Steuerdrucks.

Der Relaisventilkolben 4 wird zusammen mit weiteren Komponenten des Relaisventils 1 von einem Relaisventildeckel 8 in dem Gehäuse 2 eingeschlossen. Der Relaisventildeckel 8 ist hierbei auf das Gehäuse 2 aufgesetzt und bspw. mittels nicht dargestellter Schrauben an dem Gehäuse 2 festgeschraubt. Ein Dichtring 10 dichtet einen etwaig vorhandenen Luftspalt zwischen dem Gehäuse 2 und dem Relaisventildeckel 8 ab.

Der Relaisventildeckel 8 weist ein Befestigungsmittel 12 zur Befestigung eines Geräuschdämpfers 14 an dem Relaisventildeckel 8 auf. Der Geräuschdämpfer 14 ist auf den Relaisventildeckel 8 aufgesetzt und mittels einer Schnappverbindung 16 formschlüssig mit dem Relaisventildeckel 8 verbunden. Hierzu weist das Befestigungsmittel 12 bzw. der Relaisventildeckel 8 einen sich in eine Richtung parallel zur Relaisventilkolbenachse 6 erstreckenden und im Wesentlichen rotationssymmetrisch um die Relaisventilkolbenachse 6 ausgebildeten Abschnitt 17 auf. Dieser Abschnitt 17 weist wiederum eine tangential verlaufende Nut 18 auf. Die Nut 18 kann durchgehend ausgebildet sein oder alternativ durch mehrere voneinander getrennte jeweils als Nut ausgebildete Abschnitte gebildet sein. Der Geräuschdämpfer 14 ist zur Befestigung an dem Relaisventil 1 ausgebildet und weist Schnappnasen 20 auf, die zur Befestigung des Geräuschdämpfers 14 am Relaisventildeckel 8 mit dem Relaisventildeckel 8 verhaken bzw. mittels der Schnappverbindung 16 in die Nut 18 des Abschnitts 17 einschnappen. Hierzu wird der Geräuschdämpfer 14 entlang der Relaisventilkolbenachse 6 auf den Relaisventildeckel 8 gedrückt, wobei die Schnappnasen 20 zunächst in Richtung der Relaisventilkolbenachse 6 gedrückt werden. Schließlich rasten die Schnappnasen 20 jedoch in der Nut 18 ein und befestigen den Geräuschdämpfer 14 auf diese Weise an dem Relaisventildeckel 8.

Der Relaisventildeckel 8 weist in der Darstellung gem. Fig. 1, insbesondere zwei, Zufuhrkanäle 21, z.B. Bohrungen, auf, durch welche auf einer dem Geräuschdämpfer 14 bzw. der Relaisventilkolbenachse 6 abgewandten Seite des Abschnitts 17 ein Werkzeug zur Nut 18 geführt werden kann. Hierdurch kann mittels des Werkzeugs die Schnappverbindung 16 gelöst bzw. der Abschnitt 20 aus der Nut 18 gedrückt werden.

In einem alternativen, nicht gezeigten Ausführungsbeispiel kann jedoch die Nut 18 durch den Relaisventildeckel 8 hindurch nach außen geführt sein bzw. es kann der Abschnitt des Relaisventildeckels 8, der die Zufuhrkanäle 21 in radialer Richtung bezüglich der Relaisventilkolbenachse 6 von der Umgebung des Relaisventils 1 trennt, entfallen. Die Schnappverbindung 16 ist in diesem Fall von der Umgebung aus zugänglich, so dass auch die Zufuhrkanäle 21 entfallen können. Zum Ausformen des Deckels 8 einschließlich der Nut 18 mittels eines einzigen Werkzeugs in einem Arbeitsgang ist es zudem vorteilhaft, wenn der Durchmesser des Geräuschdämpfers 14 im Bereich der Schnappnasen 20 größer ist als der Durchmesser des darunter liegender Abschnitte des Relaisventildeckels 8.

Der Geräuschdämpfer 14 weist ein Geräuschdämpfergehäuse 22 auf, welches die Schnappnasen 20 umfasst und bspw. aus Kunststoff gebildet sein kann. Innerhalb des Geräuschdämpfergehäuses 22 ist ein Dämpfungsmittel 24 angeordnet, welches ein um die Relaisventilkolbenachse 6 gewickelt angeordnetes Dämpfungsmaterial, bspw. ein Dämpfungsvlies oder ein Dämpfungsgestrick, umfassen kann. Das Dämpfungsmittel 24 ragt hierbei direkt bis an den Relaisventildeckel 8 heran und dichtet einen etwaigen Luftspalt zwischen dem Geräuschdämpfer 14 und dem Relaisventildeckel 8 gegen ein Entweichen von Luft am Dämpfungsmittel 24 vorbei ab.

Der Relaisventildeckel weist wenigstens einen keilartig ausgebildeten, insbesondere rotationssymmetrisch um die Relaisventilkolbenachse 6 angeordneten, Abschnitt 25 auf, der bevorzugt einteilig mit dem weiteren Abschnitt, insbesondere dem Relaisventildeckel 8, ausgebildet ist, alternativ gemäß Fig. 1 jedoch auch, bspw. mittels einer Schweißverbindung, mit dem weiteren Abschnitt des Relaisventildeckels 8 verbunden sein kann. Der keilartige Abschnitt 25 greift in das Dämpfungsmittel 24 ein und keilt sich hierbei zwischen gewickelte Bahnen des Dämpfungsvlieses. Hierdurch wird das Dämpfungsvlies partiell komprimiert und es werden kürzestmögliche Entlüftungswege durch das Dämpfungsmittel verlängert.

Das Relaisventil 1 ist in Fig. 1 in einer Entlüftungsposition des Relaisventilkolbens 4 dargestellt. Zu entlüftende Druckluft gelangt hierbei von einer Arbeitskammer 26 an einem einen Ventilsitz aufweisenden Einsatz 28 vorbei in eine Entlüftungskammer 30. In dem an die Entlüftungskammer 30 angrenzenden Relaisventilkolben 4 ist ein Relaisventilkolbenloch 32 vorgesehen, so dass zu entlüftende Druckluft von der Entlüftungskammer 30 durch das Relaisventilkolbenloch 32 in Richtung eines in den Relaisventilkolben 4 hineinreichenden Abschnitts des Relaisventildeckels 8 strömen kann.

Der Relaisventildeckel 8 weist ein Relaisventildeckelloch 34 auf, welches im Bereich der Relaisventilkolbenachse 6 angeordnet ist und durch welches das Relaisventil von der Entlüftungskammer 30 entlang der Relaisventilkolbenachse 6 zum Geräuschdämpfer 14 entlüftet werden kann. Das Relaisventil 1 wird nachfolgend weiter durch einen Löcher aufweisenden Abschnitt in dem Geräuschdämpfergehäuse 22 zum Dämpfungsmittel 24 hin entlüftet. Alternativ könnte dieser Abschnitt auch Teil des Relaisventildeckels 8 oder zumindest fest mit diesem verbunden sein. Nachfolgend wird weiter durch das Dämpfungsmittel 24 und nachfolgend durch Löcher in dem Geräuschdämpfergehäuse 22 zur Atmosphäre hin entlüftet.

Im Folgenden soll die Arbeitsweise des Relaisventils 1 erläutert werden:
Der Steuerdruck wird dem Relaisventil 1 durch eine Steuerdruckleitung 36 in dem Gehäuse 2 und durch eine Steuerdruckleitung 38 in dem Relaisventildeckel 8 bereitgestellt. Druckluft gelangt hierbei durch die Steuerdruckleitungen 36 und 38 zu einer Steuerdruckkammer 40, welche von dem Relaisventildeckel 8 und dem Relaisventilkolben 4 begrenzt wird. Ein Dichtring 42 wirkt hierbei einem Entweichen von Druckluft zwischen dem Gehäuse 2 und dem Relaisventildeckel 8 entgegen. Ein Dichtring 44 und ein als Z-Ring ausgebildeter Dichtring 46 dichten den Relaisventildeckel 8 gegen den verschiebbar gegenüber dem Relaisventildeckel 8 angeordneten Relaisventilkolben 4 ab.

In einer alternativen, nicht dargestellten Ausführungsform des Relaisventils 1 kann sich das Gehäuse bis zur Steuerdruckkammer 40 erstrecken, so dass der Steuerdruck durch eine einzige Steuerdruckleitung, welche die Steuerdruckleitung 36 ersetzt, in dem Gehäuse 2 zur Steuerdruckkammer 40 geführt werden kann. Die Steuerdruckleitung 38 im Relaisventildeckel 8 kann in diesem Fall entfallen.

In einer dargestellten Entlüftungsposition des Relaisventilkolbens 4 übersteigt der Druck in der Arbeitskammer 26 den Druck in der Steuerdruckkammer 40 oder die Drücke in der Arbeitskammer 26 und in der Steuerdruckkammer 40 befinden sich im Gleichgewicht. Die Arbeitskammer 26 reicht vom Relaisventilkolben 4 bis zum Einsatz 28 und weist einen nicht dargestellten Anschluss auf, durch welchen sie mit dem Bremszylinder pneumatisch verbunden sein kann. Wenn der Druck in der Arbeitskammer 26 mindestens so groß ist wie der Steuerdruck in der Steuerdruckkammer 40, wird Druckluft von dem Bremszylinder bzw. von der Arbeitskammer 26 am Einsatz 28 vorbei, zwischen dem Relaisventilkolben 4 und einem Belüftungskolben 48 hindurch zur Entlüftungskammer 30 hin entlüftet. Von der Entlüftungskammer 30 wird erfindungsgemäß durch das Relaisventilkolbenloch 32 und durch das Relaisventildeckelloch 34 zum Geräuschdämpfer 14 hin entlüftet.

Sobald der Steuerdruck in der Steuerdruckkammer 40 geringfügig höher ist als der Druck der Arbeitskammer 26, nimmt der Relaisventilkolben 4 eine Neutralposition ein, wobei der Steuerdruck gegenüber dem Druck in der Arbeitskammer 26 groß genug ist, um den Relaisventilkolben 4 gegen eine Reibkraft an den Dichtringen 44 und 46 und ggf. an einer Prallplatte in Richtung des Belüftungskolbens 48 zu bewegen, dabei jedoch zu gering ist, um zusätzlich noch den Belüftungskolben 48 gegen eine Reibkraft an seiner Lagerung bzw. an einem Trägerelement und gegen die Federkraft der Feder 50 in eine Belüftungsposition zu bewegen.

In der Neutralposition ist ein Spalt zwischen dem Relaisventilkolben 4 und dem Belüftungskolben 48 verschlossen, so dass der Relaisventilkolben 4 die Arbeitskammer 26 von der Entlüftungskammer 30 pneumatisch absperrt. Für ein sicheres Abdichten kann der Belüftungskolben 48 mit einem Gummi umspritzt sein. Der Belüftungskolben 48 wird hierbei von einer Feder 50 in seiner Position gehalten, wobei die Feder 50 den gummierten Belüftungskolben 48 entlang der Relaisventilkolbenachse 6 mit geringer Federkraft sowohl gegen den Relaisventilkolben 4 als auch gegen den Einsatz 28 drückt, so dass die Arbeitskammer 26 auch gegen eine Belüftungskammer 52 pneumatisch abgesperrt ist.

Falls der Steuerdruck in der Steuerdruckkammer 40 den Druck in der Arbeitskammer 26 mehr als nur geringfügig übersteigt, befindet sich der Relaisventilkolben 4 in der Belüftungsposition bzw. wird in die Belüftungsposition bewegt, wobei der Steuerdruck gegenüber dem Druck in der Arbeitskammer 26 groß genug ist, um sowohl den Relaisventilkolben 4 gegen seine Reibkraft an den Dichtringen 44 und 46 und ggf. an der Prallplatte als auch den Belüftungskolben 48 gegen seine Reibkraft an seiner Lagerung bzw. an dem Trägerelement und gegen die Federkraft der Feder 50 zu bewegen.

In der Belüftungsposition drückt der Relaisventilkolben 4 den Belüftungskolben 48 gegen die geringe Kraft der Feder 50 derart entlang der Relaisventilkolbenachse 6 herunter, dass ein Spalt zwischen dem Belüftungskolben 48 und dem Einsatz 28 die Belüftungskammer 52 pneumatisch mit der Arbeitskammer 26 verbindet.

Wenn sich in der Belüftungsposition der Steuerdruck und der Druck in der Arbeitskammer 26 einander annähern, unterstützt die Federkraft der Feder 50 zunächst eine Bewegung des Relaisventilkolbens 4 und des Belüftungskolbens 48 gegen die Reibkräfte, bis der Belüftungskolben 48 am Einsatz 28 aufsetzt und die Neutralposition erreicht wird. Erst dann, wenn der Steuerdruck gegenüber dem Druck in der Arbeitskammer gering genug ist, um die Reibkräfte des Relaisventilkolbens 4 an den Dichtringen 44 und 46 sowie ggf. an der Prallplatte ohne die unterstützende Federkraft überwinden zu können, verschiebt sich der Relaisventilkolben 4 von der Neutralstellung in die Entlüftungsstellung.

Die Reibkräfte und die Federkraft der Feder 50 bewirken somit eine Hysterese, wobei der Relaisventilkolben 4, wenn er sich in der Neutralstellung befindet, auch bei geringen Unterschieden zwischen dem Steuerdruck und dem Druck in der Arbeitskammer 26 noch in der Neutralstellung verbleibt.

Die Belüftungskammer 52 kann über einen nicht dargestellten Anschluss mit Druckluft, bspw. aus einem Druckluftvorratsbehälter, versorgt werden. Diese Druckluft gelangt in die Belüftungskammer 52, durchströmt dort einen Filter 54 und gelangt weiter am Ventilsitz bzw. am Einsatz 28 vorbei zur Arbeitskammer 26. Der Filter 54 filtert etwaig vorhandene Fremdkörper aus der Druckluft, welche sich ansonsten in dem Relaisventil 1 festsetzen könnten.

Der Belüftungskolben 48 und die Feder 50 werden von einem Trägerelement 56 getragen, welches in das Gehäuse 2 eingesetzt ist. Ein Dichtring 58 dichtet das Gehäuse 2 gegen das Trägerelement 56 und damit die Belüftungskammer 52 gegen die Entlüftungskammer 30 ab. Für einen Druckausgleich eines von dem Trägerelement 56 und dem Belüftungskolben 48 gebildeten Raumes ist eine diesen Raum pneumatisch mit der Arbeitskammer 26 verbindende Öffnung 60 in dem Belüftungskolben 48 vorgesehen.

Ein Dichtring 61 dichtet das Gehäuse 2 gegen den Einsatz 28 bzw. die Belüftungskammer 52 gegen die Arbeitskammer 26 pneumatisch ab. Der Einsatz 28 ist mittels eines Klemmrings 62 in dem Gehäuse 2 festgeklemmt. Der Klemmring 62 greift hierbei in eine Nut des Gehäuses 2 ein.

Schließlich kann in der Arbeitskammer 26 eine Prallplatte 64 angeordnet sein, welche die Arbeitskammer 26 in eine obere Kammer 66 und eine untere Kammer 68 teilt. Die Prallplatte 64 dämpft eine Auslenkung des Relaisventilkolbens 4 in seine Belüftungsstellung, da Luft aus der oberen Kammer 66 lediglich durch eine in der Prallplatte 64 angeordnete Blende 70 zur unteren Kammer 68 entweichen kann. Auch in umgekehrter Richtung wird eine Reaktion des Relaisventilkolbens 4 in Erwiderung auf einen Druckanstieg in der unteren Kammer 68 gedämpft. Insgesamt wirkt die Prallplatte 64 somit einem Überschwingen des Relaisventilkolbens 4 entgegen und verkürzt somit einen Einschwingvorgang beim Aussteuern des Drucks der dem Bremskolben durch die untere Kammer 68 nach Maßgabe des Steuerdrucks bereitgestellten Druckluft. Die Prallplatte 64 kann alternativ jedoch auch entfallen.

Das Relaisventil 1 kann Teil einer Ventileinrichtung sein. In diesem Fall kann das Gehäuse 2 Teil eines dieses Gehäuse 2 umfassenden Gehäuses der Ventileinrichtung sein, wobei das Gehäuse der Ventileinrichtung weitere Bauteile, insbesondere Ventile aufweisen kann.

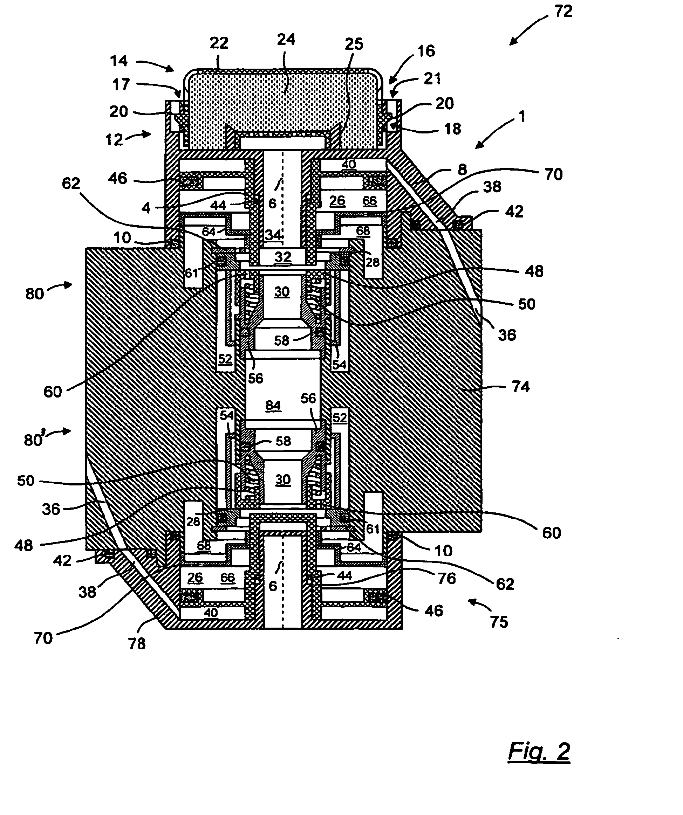

Fig. 2 zeigt eine Ventileinrichtung 72, welche ein Relaisventil 1 aufweist, das im Wesentlichen dem Relaisventil 1 von Fig. 1 gleicht. Insbesondere bezeichnen gleiche Bezugszeichen gleiche Teile. Lediglich die Steuerdruckleitung 36 ist in Fig. 2 anders in einem gemeinsamen Ventilblock 74 angeordnet. Der Ventilblock 74 kann sich zu seinen Seiten hin fortsetzen und noch weitere Ventile oder andere Bauteile aufweisen. Insbesondere kann der Ventilblock elektropneumatisch betätigbare Ventile zur Aussteuerung des Steuerdrucks aufweisen. Darüber hinaus weist der Ventilblock 74 einen nicht dargestellten Anschluss zur Verbindung mit einem Druckluftvorratsbehälter sowie verdeckt angeordnete und deshalb nicht sichtbare Anschlüsse für die Belüftungskammer 52 und die untere Kammer 68 auf. Ferner kann der Ventilblock 74 weitere ebenfalls nicht dargestellte Anschlüsse zu externen Verbrauchern, bspw. Bremszylindern aufweisen.

In dem Ventilblock 74 ist ein weiteres Relaisventil 75 angeordnet. Auch dieses Relaisventil 75 gleicht in Teilen dem Relaisventil 1 gemäß Fig. 1. Daher bezeichnen gleiche Bezugszeichen wiederum gleiche Bauteile. Allerdings ist anstelle des Relaisventilkolbens 4 ein Relaisventilkolben 76 und anstelle des Relaisventildeckels 8 ein Relaisventildeckel 78 vorgesehen. Der Relaisventilkolben 76 und der Relaisventildeckel 78 sind verschlossen und weisen kein Loch entsprechend dem Relaisventilkolbenloch 32 bzw. dem Relaisventildeckelloch 34 auf. Das Relaisventil 75 kann daher nicht durch den Relaisventilkolben 76 bzw. durch den Relaisventildeckel 78 entlüftet werden.

Der Ventilblock 74 umfasst ein Gehäuse 80 des Relaisventils 1 und ein weiteres Gehäuse 80 des Relaisventils 75. Der Ventilblock 74 bzw. die Gehäuse 80 sind derart ausgebildet, dass das Relaisventil 75 durch das Relaisventil 1 entlüftet werden kann. Hierzu sind die Entlüftungskammern 30 der Relaisventile 1 und 75 durch eine Aussparung bzw. Bohrung 84 pneumatisch miteinander verbunden. Somit muss nur ein Geräuschdämpfer 14 zur Entlüftung beider Relaisventile 1 und 75 vorgesehen werden.

In der dargestellten Figur weisen beide Relaisventilkolben 4 und 76 eine gemeinsame Relaisventilkolbenachse 6 auf. Hierdurch können die beiden Relaisventile 1 und 75 besonders einfach mittels der Aussparung bzw. Bohrung 84 miteinander verbunden werden. Alternativ können die Relaisventile 1 und 75 jedoch auch versetzt zueinander, an unterschiedlichen Seiten des Ventilblocks 74 oder auch nebeneinander angeordnet sein. In diesen Fällen kann die Aussparung bzw. Bohrung 84 durch eine oder mehrere andersartig ausgebildete Aussparungen bzw. Bohrungen ersetzt sein, welche die Entlüftungskammern 30 miteinander verbinden.

Alternativ zu dem hier gezeigten Ausführungsbeispiel kann der Relaisventilkolben 76 oder der Relaisventildeckel 78 ein Relaisventilkolbenloch bzw. Relaisventildeckelloch entsprechend dem Relaisventilkolbenloch 32 bzw. dem Relaisventildeckelloch 34 des Relaisventils 1 aufweisen.

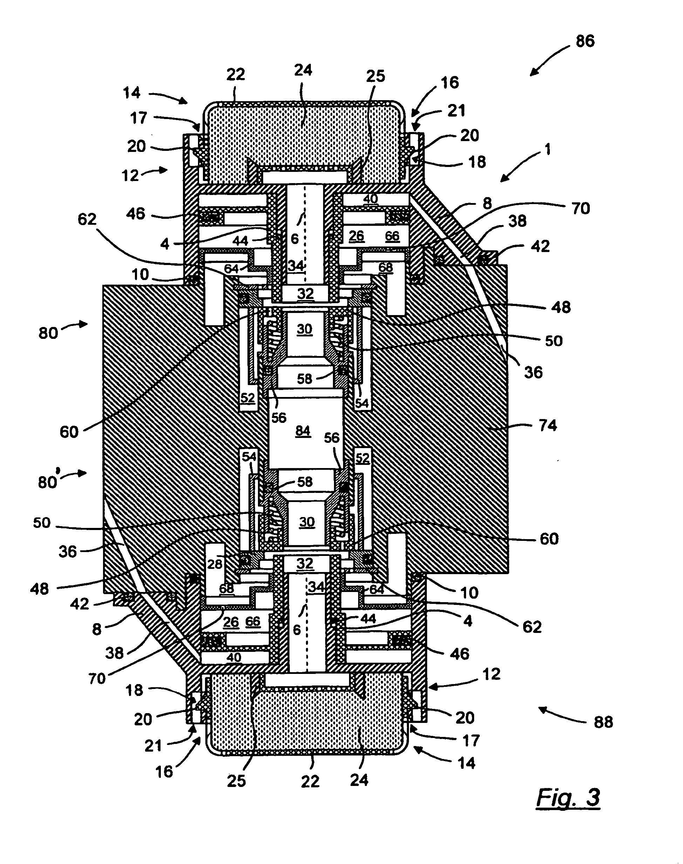

Fig. 3 zeigt eine Ventileinrichtung 86 bzw. Teile einer Ventileinrichtung 86, welche der Ventileinrichtung 72 ähnelt. Die Ventileinrichtung 86 weist zwei Relaisventile, nämlich ein Relaisventil 1 und ein weiteres Relaisventil 88 auf, wobei beide Relaisventile 1 und 88 im Wesentlichen wie das Relaisventil 1 des Ausführungsbeispiels gemäß Fig. 1 ausgebildet sind. Insbesondere bezeichnen gleiche Bezugszeichen wieder gleiche Bauteile. Die Relaisventile 1 und 88 sind gemäß dem Ausführungsbeispiel von Fig. 2 miteinander verbunden. Insbesondere ist in dem Ventilblock 74 die Aussparung bzw. Bohrung 84 vorgesehen, welche die Entlüftungskammern 30 des Relaisventils 1 und des weiteren Relaisventils 88 miteinander verbindet.

Auf beide Relaisventildeckel 8 der Relaisventile 1 und 88 sind somit Geräuschdämpfer 14 aufgesetzt. Deshalb können beide Relaisventile 1 und 88 über beide Geräuschdämpfer 14 entlüftet werden. Hierdurch kann im Vergleich zu dem Ausführungsbeispiel gemäß Fig. 2 durch eine doppelt so große Querschnittsfläche, welche insbesondere von den Relaisventildeckeln 8 im Bereich der Relaisventildeckellöcher 34 gebildet wird, entlüftet werden. Weitere Vorteile ergeben sich dann, wenn lediglich eines der Relaisventile 1 und 88 zur Zeit entlüftet wird bzw. diese Relaisventile 1 und 88 unterschiedlich viel Druckluft zu ihrer jeweiligen Entlüftungskammer 30 entlüften. Durch die Aussparung bzw. Bohrung 84 kann die zu entlüftende Druckluft nämlich im Wesentlichen gleichmäßig aufgeteilt durch die Relaisventilkolbenlöcher 32 und die Relaisventildeckellöcher 34 zu den Geräuschdämpfern 14 entlüftet werden.

Alternativ zu den Ausführungsbeispielen 2 und 3 können besonders bevorzugt die Relaisventile 1 und 75 bzw. 88 näher beieinander im Ventilblock 74 angeordnet sein. Dadurch verringern sich das Gewicht und die Abmessungen des Ventilblocks. Ferner kann durch diese Maßnahme Material, insbesondere Aluminium, eingespart werden, was die Kosten des Ventilblocks 74 senkt.

Gemäß diesen alternativen Ausführungsbeispielen sind die Belüftungskammern 52 zu einer gemeinsamen Belüftungskammer miteinander verbunden und weisen einen gemeinsamen Anschluss zur Verbindung mit einer Druckluftversorgung auf. Ein zweiter Anschluss zur Verbindung mit der Druckluftversorgung entfällt.

Alternativ oder zusätzlich sind die Trägerelemente 56 einteilig miteinander verbunden. Die Dichtringe 58 können entfallen, da kein Entweichen von Druckluft zwischen dem Gehäuse 80 bzw. Ventilblock 74 und dem Trägerelement mehr möglich ist.

Das Trägerelement kann für eine problemlose Anbringung in dem Gehäuse 80 hierfür im Detail abweichend von den in den Fig. 2 und 3 dargestellten Trägerelementen 56 ausgebildet sein, insbesondere in seinem maximalen Querschnitt an einen minimalen Querschnitt des Hohlraums im Gehäuse 80, der das Trägerelement aufnimmt, angepasst sein. Alternativ kann das gemeinsame Trägerelement oder wenigstens eines der Trägerelemente 56 auch einteilig mit dem Gehäuse 80 bzw. Ventilblock 74 ausgebildet sein.

Insgesamt stellt die Erfindung ein Relaisventil 1 und einen Geräuschdämpfer 14 bzw. eine Ventileinrichtung mit dem Relaisventil 1 und dem Geräuschdämpfer 14 bzw. eine Ventileinrichtung 72 bzw. 86 bereit, wobei das Relaisventil 1 ein verglichen mit dem Stand der Technik kompakteres, leichter qualitativ hochwertig zu fertigendes und kostengünstiger herstellbares Gehäuse 2 bzw. 80 aufweist. Die Erfindung ermöglicht dies, indem sie den Geräuschdämpfer 14 auf den Relaisventildeckel 8 aufsetzt, wobei der Relaisventildeckel 8 das Relaisventildeckelloch 32 und der Relaisventilkolben 4 das Relaisventilkolbenloch 32 aufweist. Durch die Entlüftung des Relaisventils 1 bzw. 88 durch das Relaisventilkolbenloch 32 und das Relaisventildeckelloch 34 zu dem Geräuschdämpfer 14 können bei einem Relaisventil nach dem Stand der Technik durch ein Gehäuse zu einem Geräuschdämpfer geführte Leitungen eingespart werden. Das Gehäuse 2 bzw. 80 des erfindungsgemäßen Relaisventils 1 bzw. 88 bzw. der Ventilblock 74 der Ventileinrichtung 86 kann daher besser ausgeformt werden.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Merkmalskombinationen im Rahmen der Patentansprüche als offenbart zu betrachten.

## Patentansprüche

1. Relaisventil für eine Druckluftanlage, insbesondere Druckluftbremsanlage eines Nutzfahrzeugs, wobei das Relaisventil (1, 88) ein Gehäuse (2, 80), einen in dem Gehäuse (2, 80) verschiebbar angeordneten Relaisventilkolben (4) mit einem Relaisventilkolbenloch (32) und einem den Relaisventilkolben (4) in dem Gehäuse (2, 80) einschließenden Relaisventildeckel (8) mit einem Relaisventildeckelloch (34) aufweist, **dadurch gekennzeichnet, dass** der Relaisventildeckel (8) wenigstens ein Befestigungsmittel (12) zur Befestigung eines Geräuschdämpfers (14) an dem Relaisventildeckel (8) aufweist, wobei das Relaisventil (1, 88) durch das Relaisventilkolbenloch (32) und durch das Relaisventildeckelloch (34) zu dem Geräuschdämpfer (14) entlüftbar ist, und wobei von dem Relaisventildeckel (8) und dem Relaisventilkolben (4) eine Steuerdruckkammer (40) begrenzt wird.

2. Relaisventil nach Anspruch 1, **dadurch gekennzeichnet, dass** mittels des Befestigungsmittels (12) der Geräuschdämpfer (14) formschlüssig mit dem Relaisventildeckel (8) verbindbar ist.

3. Relaisventil nach Anspruch 1 oder 2, **dadurch gekennzeichnet, dass** das Befestigungsmittel (12) und ein mit dem Befestigungsmittel zusammenwirkender Abschnitt (20) des Geräuschdämpfers (14) zusammen eine Schnappverbindung (16) bilden.

4. Relaisventil nach einem der vorherigen Ansprüche, **dadurch gekennzeichnet, dass** das Befestigungsmittel (12) wenigstens einen sich in eine Richtung parallel zu einer Relaisventilkolbenachse (6) erstreckenden Abschnitt (17) mit einer tangential zu dieser Relaisventilkolbenachse (6) angeordneten Nut (18) aufweist, in welche der Geräuschdämpfer (14), insbesondere mittels einer Schnappnase (20), zu seiner Befestigung am Relaisventildeckel (8) einschnappbar ist.

5. Relaisventil nach einem der vorherigen Ansprüche, **dadurch gekennzeichnet, dass** das Befestigungsmittel (12) wenigstens eine Schnappnase aufweist, die zur Befestigung des Geräuschdämpfers (14) am Relaisventildeckel (8) in eine Nut am Geräuschdämpfer (14) einschnappbar ist.

6. Ventileinrichtung für eine Druckluftanlage, insbesondere Druckluftbremsanlage eines Nutzfahrzeugs, **gekennzeichnet durch** ein Relaisventil (1, 88) nach einem der Ansprüche 1 bis 5.

7. Ventileinrichtung nach Anspruch 6, **dadurch gekennzeichnet, dass** die Ventileinrichtung (72, 86) eine Luftaufbereitungseinrichtung, eine elektromagnetische Feststellbremseinrichtung oder ein Achsmodulator ist.

8. Ventileinrichtung nach Anspruch 6 oder 7, **gekennzeichnet durch** eine Drucklufteinrichtung, insbesondere weiteres Relaisventil (75, 88), mit einem weiteren Gehäuse (80'), wobei die Ventileinrichtung (72, 86) ein Gehäuse bzw. einen Ventilblock (74) aufweist, welches bzw. welcher beide Gehäuse (80) des Relaisventils (1) und der weiteren Drucklufteinrichtung (75, 88) umfasst, und wobei diese weitere Drucklufteinrichtung (75, 88) **durch** eine Aussparung bzw. Bohrung (84) in dem Gehäuse bzw. Ventilblock (74) und nachfolgend **durch** das Relaisventil (1) zu dem Geräuschdämpfer (14) entlüftbar ist.

9. Ventileinrichtung nach Anspruch 8, **dadurch gekennzeichnet, dass** die Drucklufteinrichtung (88) ein weiteres Relaisventil (88) nach einem der Ansprüche 1 bis 5 mit einem weiteren Relaisventildeckel (8) ist.

10. Fahrzeug, insbesondere Nutzfahrzeug, **gekennzeichnet durch** wenigstens ein Relaisventil (1, 88) nach einem der Ansprüche 1 bis 5 und/oder wenigstens eine Ventileinrichtung (72, 86) nach einem der Ansprüche 6 bis 9.

## Claims

1. Relay valve for a compressed-air system, in particular a compressed-air brake system of a commercial vehicle, the relay valve (1, 88) having a housing (2, 80), a relay-valve piston (4) which is arranged displaceably in the housing (2, 80) with a relay-valve piston hole (32) and a relay-valve cover (8) which encloses the relay-valve piston (4) in the housing (2, 80) and has a relay-valve cover hole (34), **characterized in that** the relay-valve cover (8) has at least one fastening means (12) for fastening a noise damper (14) to the relay-valve cover (8), it being possible for the relay valve (1, 88) to be ventilated by the relay-valve piston hole (32) and by the relay-valve cover hole (34) to the noise damper (14), and a control pressure chamber (40) being delimited by the relay-valve cover (8) and the relay-valve piston (4).

2. Relay valve according to Claim 1, **characterized in that** the noise damper (14) can be connected in a positively locking manner to the relay-valve cover (8) by means of the fastening means (12).

3. Relay valve according to Claim 1 or 2, **characterized in that** the fastening means (12) and a section (20), interacting with the fastening means, of the noise damper (14) together form a snap-action connection (16).

4. Relay valve according to one of the preceding claims, **characterized in that** the fastening means (12) has at least one section (17) which extends in a direction parallel to a relay-valve piston axis (6) with a groove (18) which is arranged tangentially with respect to the said relay-valve piston axis (6) and into which the noise damper (14) can be snapped, in particular by means of a snap-action lug (20), in order to fasten it to the relay-valve cover (8).

5. Relay valve according to one of the preceding claims, **characterized in that** the fastening means (12) has at least one snap-action lug which can be snapped into a groove on the noise damper (14) in order to fasten the noise damper (14) to the relay-valve cover (8).

6. Valve device for a compressed-air system, in particular a compressed-air brake system of a commercial vehicle, **characterized by** a relay valve (1, 88) according to one of Claims 1 to 5.

7. Valve device according to Claim 6, **characterized in that** the valve device (72, 86) is an air-preparation device, an electromagnetic parking brake device or an axle modulator.

8. Valve device according to Claim 6 or 7, **characterized by** a compressed-air device, in particular a further relay valve (75, 88), having a further housing (80'), the valve device (72, 86) having a housing or a valve block (74) which comprises both housings (80, 80') of the relay valve (1) and of the further compressed-air device (75, 88), and it being possible for the said further compressed-air device (75, 88) to be ventilated by a cut-out or hole (84) in the housing or valve block (74) and, following this, by the relay valve (1) to the noise damper (14).

9. Valve device according to Claim 8, **characterized in that** the compressed-air device (88) is a further relay valve (88) according to one of Claims 1 to 5 with a further relay-valve cover (8).

10. Vehicle, in particular commercial vehicle, **characterized by** at least one relay valve (1, 88) according to one of Claims 1 to 5 and/or at least one valve device (72, 86) according to one of Claims 6 to 9.

## Revendications

1. Soupape-relais pour une installation à air comprimé, en particulier une installation de freinage à air comprimé d'un véhicule utilitaire, la soupape-relais (1, 88) présentant un boîtier (2, 80), un piston de soupape-relais (4) disposé de manière à pouvoir coulisser dans le boîtier (2, 80) avec un trou de piston de soupape-relais (32) et un couvercle de soupape-relais (8) enfermant le piston de soupape-relais (4) dans le boîtier (2, 80) avec un trou de couvercle de soupape-relais (34), **caractérisée en ce que** le couvercle de soupape-relais (8) présente au moins un moyen de fixation (12) pour la fixation d'un silencieux (14) sur le couvercle de soupape-relais (8), la soupape-relais (1, 88) pouvant être désaérée par le trou de piston de soupape-relais (32) et par le trou de couvercle de soupape-relais (34) vers le silencieux (14), et une chambre de pression de commande (40) étant limitée par le couvercle de soupape-relais (8) et le piston de soupape-relais (4).

2. Soupape-relais selon la revendication 1, **caractérisée en ce que** le silencieux (14) peut être connecté par engagement par correspondance de forme au couvercle de soupape-relais (8) par l'intermédiaire du moyen de fixation (12).

3. Soupape-relais selon la revendication 1 ou 2, **caractérisée en ce que** le moyen de fixation (12) et une portion (20) du silencieux (14) coopérant avec le moyen de fixation forment ensemble une connexion par encliquetage (16).

4. Soupape-relais selon l'une quelconque des revendications précédentes, **caractérisée en ce que** le moyen de fixation (12) présente au moins une portion (17) s'étendant dans une direction parallèle à un axe de piston de soupape-relais (6) avec une rainure (18) disposée tangentiellement par rapport à cet axe de piston de soupape-relais (6), dans laquelle rainure le silencieux (14), en particulier au moyen d'un ergot d'encliquetage (20), peut être encliqueté en vue de sa fixation sur le couvercle de soupape-relais (8).

5. Soupape-relais selon l'une quelconque des revendications précédentes, **caractérisée en ce que** le moyen de fixation (12) présente au moins un ergot d'encliquetage, qui peut être encliqueté dans une rainure sur le silencieux (14) en vue de la fixation du silencieux (14) sur le couvercle de soupape-relais (8).

6. Dispositif de soupape pour une installation à air comprimé, en particulier une installation de freinage à air comprimé d'un véhicule utilitaire, **caractérisé par** une soupape-relais (1, 88) selon l'une quelconque des revendications 1 à 5.

7. Dispositif de soupape selon la revendication 6, **caractérisé en ce que** le dispositif de soupape (72, 86) est un dispositif de traitement d'air, un dispositif de frein de stationnement électromagnétique ou un modulateur d'essieu.

8. Dispositif de soupape selon la revendication 6 ou 7, **caractérisé par** un dispositif à air comprimé, en particulier une soupape-relais supplémentaire (75, 88), comprenant un boîtier supplémentaire (80), le dispositif de soupape (72, 86) présentant un boîtier ou un bloc-soupapes (74), lequel comprend les deux boîtiers (80, 80') de la soupape-relais (1) et du dispositif à air comprimé supplémentaire (75, 88), et ce dispositif à air comprimé supplémentaire (75, 88) pouvant être désaéré par un évidement ou un alésage (84) dans le boîtier ou le bloc-soupapes (74) et ensuite par la soupape-relais (1) vers le silencieux (14).

9. Dispositif de soupape selon la revendication 8, **caractérisé en ce que** le dispositif à air comprimé (88) est une soupape-relais supplémentaire (88) selon l'une quelconque des revendications 1 à 5 avec un couvercle de soupape-relais supplémentaire (8).

10. Véhicule, en particulier véhicule utilitaire, **caractérisé par** au moins une soupape-relais (1, 88) selon l'une quelconque des revendications 1 à 5 et/ou au moins un dispositif de soupape (72, 86) selon l'une quelconque des revendications 6 à 9.
